# EUROPEAN PATENT APPLICATION

(11) **EP 4 071 947 A1**
(43) Date of publication of application: **12.10.2022**
(21) Application number: 22162031.3
(22) Date of filing: 15.03.2022
(51) Int. Cl.: H01T 4/06, H01C 7/12, H01H 85/44, H01T 4/08

(54) **SURGE ARRESTER FOR POWER-GRID PROTECTION IN A MULTI-POLE DESIGN TO PROTECT THE POWER GRID**

(30) Priority: 07.04.2021 CZ 202138703 U
(71) Applicant: SALTEK s.r.o., 40007 Usti nad Labem (CZ)
(72) Inventor: SUCHY, Jaromir, 40340 Ústí nad Labem - Skorotice (CZ); TOMAN, Vladimir, 41181 Brozany nad Ohri (CZ)
(74) Representative: Kratochvil, Vaclav

(57) **Abstract**

A surge arrester in multi-pole design for protection of the power grid, intended for installation to busbar (8) having at least four bars (PEN, L1; L2; L3), comprising a housing (1) and a surge arrester block (2) connected to a main contact system (3) with a spacing corresponding to the spacing of the busbar (8) bars and a connection device (4) comprising at least a single-pole connector (5) to connect an external meter and/or control device, and an auxiliary contact system (6) to electrically connect to the busbars (8), wherein the auxiliary contact system (6) is separated and electrically isolated from the main contact system (3) in the cabinet (1).

## Description

### Technical Field

The technical solution relates to a surge arrester to protect the power grid in a multi-pole design, intended for installation to a system with multiple busbars (PE; N, L1; L2; L3, or PEN, L1; L2; L3)

### Background Art

Modern busbar systems allow the installation of Smart Meter Gateways to collect online the consumption data for end customers of energy companies. These devices contain sensitive electronics and must be protected against impulse surges by surge arresters. Due to the limited space in a switchboard, these surge arresters are also equipped with connection pins or connectors located on the housing to power external devices, especially meter gateways.

For example, DE102019112674A1 and DE202019102722U1 describe a surge arrester comprising a module housing with surge protecting components, equipped with contact parts to connect the surge protecting components electrically to a busbar, and an auxiliary power-supply connector located on the module housing. The auxiliary power-supply connector is electrically connected to the contact parts so that external devices can be powered from the busbar.

Another document, DE202019103321U1, describes a similar device to be installed on a busbar, with housing with contact parts for mechanical and electrical connection of the surge arrester to the busbar and a voltage branch connected to the busbar by the same contact parts. The voltage branch designed to power an external device, especially an external meter or control unit, contains overcurrent protection.

Another document, DE102019003316A1, describes a surge arrester for installation on a busbar that has an enclosure with a connection area for mechanically and electrically contacting the busbar, the surge arrester to protect low-voltage power systems that can be connected to the busbar using the connection area, and a voltage branch that is electrically connected to at least two surge arresters to power an external device.

The disadvantage of these solutions is that the contact parts connecting the surge arrester to the busbar also connect the voltage branch or the auxiliary power-supply connector. When loading the contact parts with high impulse currents, local surface erosion occurs, and, thus, the contact resistance between the contact part and the busbar increases adversely. Thus, the contact part may heat up and consequently lose their power-supply function, resulting in a failure of the meter gateways.

### Summary of Invention

The above disadvantages are eliminated by the surge arrester to protect the distribution grid in multi-pole design, intended for the mechanical and electrical connection to a busbar with at least four bars (PEN, L1; L2; L3) through the main contact system, comprising a cabinet equipped with the main contact system with a spacing corresponding to the spacing of the busbar bars, a surge arrester block electrically connected to the main contact system, and a connection device having a connector electrically connected to the busbar via an auxiliary contact system to connect an external meter and/or control device, wherein the connector is at least single-pole, according to the present invention. The summary thereof is that the auxiliary contact system is located on the cabinet, wherein it is spatially separated and electrically isolated from the main contact system in the cabinet.

The connection device of the auxiliary contact system preferably includes overcurrent protection.

The overcurrent protection preferably consists of a replaceable fuse.

The auxiliary contact system is preferably located on the electrical connection housing with at least one busbar.

In the preferred embodiment, the busbar consists of five bars (PE, N, L1; L2; L3).

The exemplary embodiment of the surge arrester effectively protects connected devices against the effects of impulse overvoltage while providing a compact, space-saving solution to power modern smart meter grid devices (SMGs), eliminating installation and assembly costs. It was achieved by integrating the surge arrester block and the separate connection device so that no additional apparatus is required for installation.

### Brief description of Drawings

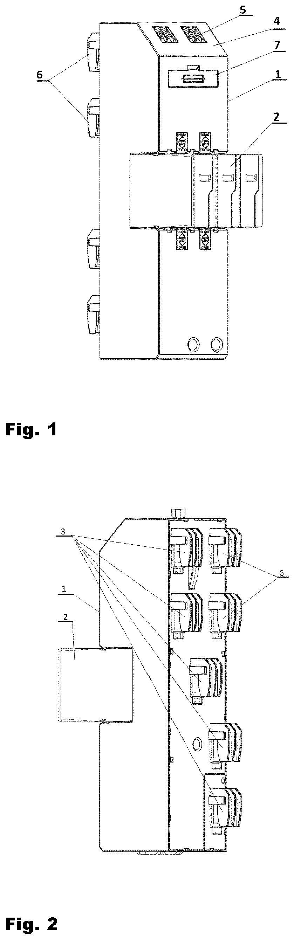

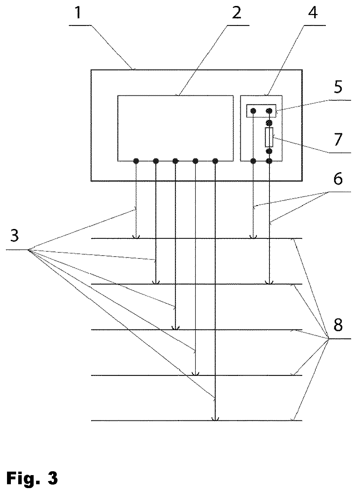

The surge arrester for protection of the power grid in multi-pole design according to this invention will be described in more detail on a specific example of the embodiment referring to attached drawings, where Fig. 1 shows the exemplary surge arrester in axonometric top view. Fig. 2 shows this arrester in axonometric bottom view, and Fig. 3 shows the wiring diagram of the individual parts of the arrester.

### Decription of Embodiments

The exemplary surge arrester in multi-pole design for protection of the power grid is designed to be installed to the busbar 8 having five bars PE, N, L1, L2, L3.

The surge arrester comprises housing 1 and the surge arrester block 2 connected to the main contact system 3 to connect to the busbars 8 electrically, and the connection device 4 comprising the connector 5 and the auxiliary contact system 6 to electrically connect to the busbars 8, wherein the auxiliary contact system 6 is not electrically connected to the main contact system 3 in the housing 1. The connection device 4 comprises the overcurrent protection 7, for example, a replaceable fuse. The auxiliary contact system 6 is located on housing 1 and allows electrical connection to at least one busbar 8.

The exemplary embodiment of the surge arrester effectively protects connected devices against the effects of impulse overvoltage while providing a compact, space-saving solution to power modern smart meter grid devices (SMGs). No additional devices are needed for the actual installation.

### Industrial Applicability

The surge arrester according to this invention can be used to protect the power grid in multi-pole design and is intended for mechanical and electrical connection by the main contact system to the busbar having at least four bars.

### Reference Signs List

- 1.: Housing
- 2.: Surge-arrester block
- 3.: Main contact system
- 4.: Connection device
- 5.: Connector
- 6.: Auxiliary contact system
- 7.: Overcurrent protection
- 8.: Busbar

## Claims

1. A surge arrester in multi-pole design for protection of the power grid, intended for installation to busbar (8) having at least four bars (PEN, L1; L2; L3), comprising a housing (1) and a surge arrester block (2) connected to a main contact system (3) with a spacing corresponding to the spacing of the busbar (8) bars and a connection device (4) comprising at least a single-pole connector (5) to connect an external meter and/or control device, and an auxiliary contact system (6) to electrically connect to the busbars (8), ***characterised in that*** the auxiliary contact system (6) is separated and electrically isolated from the main contact system (3) in the cabinet (1).

2. The surge arrester according to claim 1, ***characterised in that*** the connection device (4) comprises an overcurrent protection (7).

3. The surge arrester according to claim 2, ***characterised in that*** the overcurrent protection (7) consists of a replaceable fuse.

4. The surge arrester according to any one of claims 1 to 3, ***characterised in that*** the auxiliary contact system (6) is located on the housing (1) to connect to at least one busbar (8) electrically.

5. The surge arrester according to any one of claims 1 to 4, ***characterised in that*** the busbar consists of five bars (PE, N, L1; L2; L3).
